(19) Europäisches Patentamt
European Patent Office
Office européen des brevets

(11) **EP 1 835 442 A2**

(12) **EUROPÄISCHE PATENTANMELDUNG**

(43) Veröffentlichungstag:
**19.09.2007 Patentblatt 2007/38**

(51) Int Cl.:
*G06K 9/46* (2006.01)   *G06K 9/80* (2006.01)

(21) Anmeldenummer: **07103855.8**

(22) Anmeldetag: **09.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **16.03.2006 DE 102006012477**

(71) Anmelder: **ROBERT BOSCH GMBH**
**70442 Stuttgart (DE)**

(72) Erfinder: **Withopf, Daniel**
**97953 Koenigsheim (DE)**

(54) **Bewertungsvorrichtung, Verfahren und Computerprogramm**

(57)    Es wird eine Bewertungsvorrichtung (1) zur Bewertung von Testobjekten mit einem oder mehreren Gesamtklassifikatoren (6,7,8) vorgeschlagen, wobei mindestens einer der Gesamtklassifikatoren (6,7,8) einen oder mehrere Einzelklassifikatoren aufweist, wobei mindestens einer der Einzelklassifikatoren programmtechnisch und/oder schaltungstechnisch zur Erzeugung eines Einzelklassifikationswertes ausgebildet ist, wobei ein Merkmal auf mindestens eines der Testobjekte angewendet wird, wobei als Antwort auf die Anwendung des Merkmals ein Merkmalswert gebildet wird und wobei der Merkmalswert und/oder ein von dem Merkmalswert abgeleiteter Verarbeitungswert mit Hilfe einer Bewertungsfunktion auf den Einzelklassifikationswert abgebildet wird, und wobei der Wertebereich für den Einzelklassifikationswert mehrfach gestufte und/oder reelwertige Werte umfasst.

Fig. 2

**EP 1 835 442 A2**

**Beschreibung**

Stand der Technik

Die Erfindung betrifft eine Bewertungsvorrichtung zur Bewertung von Testobjekten mit einem oder mehreren Gesamtklassifikatoren, wobei mindestens einer der Gesamtklassifikatoren einen oder mehrere Einzelklassifikatoren aufweist, wobei mindestens einer der Einzelklassifikatoren programmtechnisch und/oder schaltungstechnisch zur Erzeugung eines Einzelklassifikationswertes ausgebildet ist, wobei ein Merkmal auf eines der Testobjekte angewendet wird, wobei als Antwort auf die Anwendung des Merkmals ein Merkmalswert gebildet wird und wobei der Merkmalswert und/oder ein von dem Merkmalswert abgeleiteter Verarbeitungswert mit Hilfe einer Bewertungsfunktion auf den Einzelklassifikationswert abgebildet wird, sowie ein entsprechendes Verfahren und Computerprogramm.

Bei der Analyse von großen Datenmengen werden üblicherweise Algorithmen eingesetzt, die einzelne Datensätze der Datenmengen anhand von vorgegebenen Bedingungen bewerten oder klassifizieren. Beispielsweise werden bei der digitalen Bildverarbeitung Bilder oder Bildersequenzen nach Suchobjekten untersucht. In bekannten Verfahren werden dabei Bildbereiche der Bilder oder Bildersequenzen mit einem Suchobjekt verglichen und danach bewertet oder klassifiziert, ob das Suchobjekt sich in dem Bildbereich befindet.

In dem wissenschaftlichen Artikel von Paul Viola und Michael Jones: Rapid object detection using a boosted cascade of simple features. In Proc. IEEE Conf. Computer Vision Pattern Recognition, Cambridge, GB, 2001 wird ein entsprechendes Verfahren zur schnellen Detektion eines Suchobjekts in einem Bild beschrieben. Das offenbarte Verfahren weist nach Ansicht der Autoren drei wesentliche Bestandteile auf: Zum einen wird die Verwendung eines Integralbildes erläutert, welches eine kodierte Darstellung des Originalbilds und somit eine sehr effektive Anwendung von Merkmalen auf die Bildinformationen des Originalbildes ermöglicht. Zum zweiten wird ein Lernalgorithmus vorgeschlagen, welcher die Konstruktion von effektiven Gesamtklassifikatoren auf Basis einer automatisierten Auswahl von Merkmalen bzw. Einzelklassifikatoren erlaubt, wobei die Einzelklassifikatoren als schwache Klassifikatoren eine binäre Klassifizierung des Testobjekts durchführen. Zum dritten wird vorgeschlagen, die Klassifikatoren in einer Kaskade anzuordnen, so dass ein Testobjekt, also z.B. ein Bildbereich eines zu untersuchenden Bildes, bei entsprechender hoher Bewertung bei der Anwendung der Merkmale der einzelnen Klassifikatoren, die Klassifikatoren in einer sequenziellen Folge durchläuft, also von Klassifikator zu Klassifikator weitergereicht wird, oder - falls die Bewertung nicht ausreichend ist - verworfen wird.

Offenbarung der Erfindung

Die Erfindung betrifft ein Bewertungsvorrichtung mit den Merkmalen des Anspruchs 1 sowie ein Verfahren mit den Merkmalen des Anspruchs 15 und ein Computerprogramm mit den Merkmalen des Anspruchs 16. Vorteilhafte und/oder bevorzugte Ausführungsformen der Erfindung sind durch die Unteransprüche und/oder die nachfolgende Beschreibung insbesondere in Verbindung mit den Figuren offenbart.

Erfindungsgemäß wird eine Bewertungsvorrichtung zur Bewertung von Testobjekten vorgeschlagen. Hierzu umfasst die Bewertungsvorrichtung einen oder mehrere Gesamtklassifikatoren, die von den Testobjekten insbesondere für eine Zwischenklassifikation durchlaufen werden. Prinzipiell können die Gesamtklassifikatoren beliebig angeordnet sein, bevorzugt sind diese jedoch so angeordnet, dass sie von den Testobjekten sequenziell, insbesondere abschnittsweise sequenziell durchlaufen werden.

Mindestens einer der Gesamtklassifikatoren weist einen oder mehrere Einzelklassifikatoren auf, wobei jeder Einzelklassifikator zur Erzeugung eines Einzelklassifikationswertes programmtechnisch und/oder schaltungstechnisch ausgebildet ist. Bevorzugt werden die Einzelklassifikationswerte eines Gesamtklassifikators zu einem Zwischenklassifikationswert zusammengefasst.

Der, einige oder jeder Einzelklassifikator sind schaltungstechnisch und/oder programmtechnisch so realisiert, dass eine erste Stufe zur Anwendung eines Merkmals auf mindestens eines oder einige der Testobjekte ausgebildet ist, wobei als Antwort auf die Anwendung des Merkmals ein Merkmalswert gebildet wird und in einer zweiten Stufe der Merkmalswert und/oder ein von dem Merkmalswert abgeleiteter Verarbeitungswert mit Hilfe und/oder durch eine Bewertungsfunktion auf den Einzelklassifikationswert abgebildet wird. Die Bewertungsfunktion ist bevorzugt als Zuordnungsfunktion ausgebildet, die einem Merkmalswert als Eingangswert einen Einzelklassifikationswert als Ausgangswert zuordnet.

Erfindungsgemäß ist vorgesehen, dass der Wertebereich, insbesondere der verwendete Wertebereich, für den Einzelklassifikationswert mehrfach gestufte und/oder reellwertige Werte umfasst, wobei der Wertebereich vorzugsweise mit mehr als drei verschiedenen Elementen ausgebildet ist.

Die Erfindung geht dabei von der Überlegung aus, dass die aus dem Stand der Technik bekannte Verwendung von binären Einzelklassifikatoren bei Bewertungsvorrichtungen zwar deutliche Vorteile hinsichtlich der Verarbeitungsgeschwindigkeit zu bringen scheint, dass aber die Übergabe von höher als binär kodierten Einzelklassifikationswerten, also Einzelklassifikationswerten mit mehr als zwei Werten im Wertebereich, an den Gesamtklassifikator die Genauigkeit der Zwischenklassifikation des Gesamtklassifikators und somit die Genauigkeit der Bewertungsvorrichtung deutlich erhöht.

Wird nun die Genauigkeit der erfindungsgemäßen Bewertungsvorrichtung an die Genauigkeit einer bekannten Bewertungsvorrichtung, die nur binär kodierte Einzelklassifikationswerte verwendet, angeglichen, so kann die Anzahl der Klassifikationsschritte reduziert und somit überraschenderweise sogar Rechenzeit bei gleicher Genauigkeit gegenüber der aus dem Stand der Technik bekannten Bewertungsvorrichtung eingespart werden.

Bei einer vorteilhaften Weiterbildung der Erfindung weisen die Merkmalswerte und/oder die Verarbeitungswerte jeweils eine zugeordnete Wertemenge auf, wobei eine oder beide Wertemengen äquidistante Werte umfassen und/oder eine Mächtigkeit, also eine Anzahl von Werten, von $2^n$ Elementen aufweisen, wobei n eine ganze, natürliche Zahl repräsentiert. Besonders bevorzugt ist die Verwendung von 32 oder 64 Werten. Weiterhin bevorzugt ist vorgesehen, dass die Mächtigkeit der Wertemenge der Merkmalswerte größer ist als die Mächtigkeit der Wertemenge der Verarbeitungswerte. Vorzugsweise ist die Mächtigkeit der Wertemenge der Verarbeitungswerte größer als 3. Für eine effiziente Berechnung ist die Mächtigkeit der Wertemenge der Verarbeitungswerte bevorzugt kleiner als 513, insbesondere kleiner als 257.

Bei einer besonders bevorzugten Ausführungsform repräsentieren und/oder indizieren die Verarbeitungswerte eine Vielzahl von äquidistanten Intervallen, in die der oder die Merkmalswerte eingeordnet sind oder werden. Der Einzelklassifikator ist somit ausgebildet, um jeden möglichen Merkmalswert in eines der Intervalle einzuordnen. Die Verwendung von äquidistanten Werten und/oder einer Wertemengenmächtigkeit von $2^n$ Werten insbesondere für die Verarbeitungswerte führt zu deutlichen Vorteilen bei der Rechengeschwindigkeit, da der zu jedem Merkmalswert gehörige Intervallindex mit nur einer Division und einer Subtraktion ermittelt werden kann. Vorzugsweise ist jedes Intervall so ausgebildet, dass es eine Mehrzahl von Merkmalswerten umfasst. Die Intervalle werden durch die Bewertungsfunktion auf die Einzelklassifikationswerte abgebildet, so dass vorzugsweise die Wertemenge der Verarbeitungswerte, insbesondere die Anzahl der Intervalle, gleich mächtig wie die Wertemenge der Einzelklassifikationswerte ist.

Bei einer bevorzugten Ausführungsform gibt die Bewertungsfunktion des Einzelklassifikators als Einzelklassifikationswert eine Wahrscheinlichkeit oder einen Wert, aus dem die Wahrscheinlichkeit abgeleitet werden kann oder eine Transformation , insbesondere eine beliebige Funktion, der Wahrscheinlichkeit dafür aus, ob das Merkmal des Einzelklassifikators und/oder ein Suchobjekt in dem Testobjekt vorhanden ist. Die Wahrscheinlichkeit ist bevorzugt auf einen Bereich, z.B. zwischen 0 und 1, normiert, so dass der Wertebereich für die Einzelklassifikationswerte alle reellen Werte in diesem Bereich, also z. B. zwischen 0 und 1, umfasst. Alternativ ist dieser Bereich mehrfach gestuft, so dass der Wertebereich beispielsweise die Menge {0; 0,1; 0,2 ...1} oder auch {0, 0.05, 0.2, 0.4, 0.41, 0.48,...} umfasst. Als weitere mögliche Alternative ist die Wahrscheinlichkeit auf einen beliebigen Zahlenbereich normiert. Bevorzugt werden 32 oder 64 Ausgaben im Intervall {-1,1} verwendet. Die möglichen Werte für die Einzelklassifikationswerte können bei besonderen Ausführungsformen äquidistant sein, bevorzugt sind diese als beliebig beabstandete Werte ausgebildet, da die Einzelklassifikationswerte durch ein Training der Bewertungsfunktion mit Testobjekten erzeugt werden.

Bevorzugt ist dem Einzelklassifikator genau eine Bewertungsfunktion zugeordnet. Insbesondere erhält oder erzeugt der Einzelklassifikator pro Testobjekt genau einen Merkmalswert, der mittels der genau einen Bewertungsfunktion in genau einen Einzelklassifikationswert abgebildet wird.

Bei einer vorteilhaften Weiterbildung weist die Bewertungsvorrichtung ein Trainingsmodul auf, welches zur Erzeugung und/oder zum Training der Bewertungsfunktion und/oder des Gesamtklassifikators ausgebildet ist.

Das Trainingsmodul ist programmtechnisch und/oder schaltungstechnisch zur Aufnahme von Trainingsobjekten ausgebildet, beispielsweise indem das Trainingsmodul mit einem Speicher verbunden ist, der eine Mehrzahl von Trainingsobjekten aufweist, oder indem eine Schnittstelle zur Eingabe von Trainingsobjekten vorgesehen ist. Die Trainingsobjekte sind in der Art ähnlich und/oder identisch zu den Testobjekten ausgebildet, weisen jedoch ergänzend eine Bewertungsinformation, insbesondere eine objektive Bewertungsinformation auf. Bevorzugt ist die objektive Bewertungsinformation ausgebildet, so dass die von der Bewertungsvorrichtung erstellte subjektive Bewertung mit der objektiven Bewertungsinformation vergleichbar ist, insbesondere um die Richtigkeit und/oder Qualität der subjektiven Bewertung zu prüfen. Beispielsweise weisen die Trainingsobjekte für den Fall, dass die Testobjekte durch Einteilung in Klassen bewertet werden, als Bewertungsinformation die Klassenzugehörigkeit auf.

Insbesondere für die Erzeugung und/oder für das Training der Bewertungsfunktion ist das Trainingsmodul ausgebildet, um ein Testmerkmal auf die Trainingsobjekte anzuwenden und die darauf als Antwort gebildeten Merkmalswerte der Trainingsobjekte statistisch auszuwerten, insbesondere eine Häufigkeitsverteilung in Bezug auf die Merkmalswerte zu erstellen. Hierbei werden Intervalle gebildet, wobei jedes Intervall einen Merkmalswertebereich umfasst. In diese Intervalle werden anschließend die Trainingsobjekte eingeordnet. Das Trainingsmodul ist bevorzugt weitergebildet, indem aus der statistischen Auswertung die Bewertungsfunktion erzeugt und/oder trainiert wird. Vorzugsweise wird jedem Merkmalswert und/oder Intervall eine Wahrscheinlichkeit für eine Bewertung, z.B. für eine Klassenzugehörigkeit zugeordnet. Die Zuordnung erfolgt insbesondere durch einen Vergleich von dem Merkmalswert und/oder Intervall und der objektiven Bewertungsinformation der Trainingsobjekte, die im Rahmen der Häufigkeitsverteilung diesem Merkmalswert und/oder Intervall zugeordnet sind. Vorzugsweise bildet die Gesamtheit dieser Zuordnungen die erzeugte und/oder trainierte Bewertungsfunktion.

Bevorzugt wird die Gesamtheit eines Merkmals und einer derartigen trainierten und/oder erzeugten und/oder einer vergleichbaren Bewertungsfunktion als trainierter und/oder erzeugter Einzelklassifikator definiert. Der Vorteil dieser Ausbildung liegt darin, dass die Einzelklassifikatoren einen sehr geringen Klassifikationsfehler aufweisen.

Alternativ oder ergänzend ist das Trainingsmodul zur Erzeugung und/oder zum Training des Gesamtklassifikators und/oder einer Kaskade bzw. eines Baums (wie nachfolgend noch erläutert wird) ausgebildet und zwar bevorzugt ebenfalls auf Basis der statistischen Auswertung von Merkmalswerten von Trainingsobjekten. Bevorzugt weist das Trainingsmodul eine Auswahleinrichtung aus, die zur Auswahl einer Untermenge von einer Menge von erzeugten und/oder trainierten Einzelklassifikatoren ausgebildet ist. Vorzugsweise ist für diesen Zweck ein Merkmal- und/oder Einzelklassifikator-Selektionsalgorithmus implementiert, der anhand von Kriterien, wie z.B. einem Fehlermaß auf Basis eines Vergleichs der Bewertung durch den Einzelklassifikator und der objektiven Bewertungsinformation, eine optimierte Menge von Einzelklassifikatoren auswählt. Bevorzugt erfolgt die Auswahl über ein iteratives Vorgehen. Beispiele für solche Verfahren sind Sequential Forward/Backward Search, sowie Bagging- und/oder Boosting-Verfahren. Derart erzeugte Gesamtklassifikatoren umfassen diejenigen Merkmale oder Einzelklassifikatoren, die statistisch am signifikantesten sind und somit am Besten z.B. zur Unterscheidung von verschiedenen Klassen (z.B. Objekt / nicht Objekt oder LKW/PKW/Motorrad/Fußgänger) geeignet sind. Durch das automatisierte Training werden aufwändige und gegebenenfalls fehleranfällige Parameteranpassungen und/oder die Merkmalsauswahl durch einen Experten vermieden.

Bei einer bevorzugten Realisierung der Bewertungsvorrichtung sind die Gesamtklassifikatoren als Knoten in einer Baum- und/oder Kaskadenstruktur angeordnet und/oder anordnenbar. Insbesondere werden mehr als ein Gesamtklassifikator auf ein Testobjekt angewendet. Die Baumstruktur ist bevorzugt dadurch gekennzeichnet, dass auf einen ersten Knoten nachfolgend und parallel zueinander mehrere weitere Nachfolgerknoten angeordnet sind, wobei insbesondere auf Basis der Zwischenklassifikation in dem ersten Knoten bestimmt wird, an welchen der parallel nachfolgenden Nachfolgerknoten das Testobjekt übergeben wird und/oder ob das Testobjekt verworfen wird. Hierdurch ist es auch möglich, mit dem erfindungsgemäßen Verfahren mehrere Arten oder Klassen von Testobjekten zu unterscheiden (z.B. die vier Klassen Auto / LKW / Motorrad und kein Fahrzeug), so dass das erfindungsgemäße Verfahren optional mehrklassenfähig ausgebildet ist. Eine Kaskade ist bevorzugt durch eine rein und/oder ausschließlich serielle Anordnung der Knoten, insbesondere aller Knoten gekennzeichnet.

Bei einer bevorzugten Weiterbildung sind die Gesamtklassifikatoren zumindest abschnittsweise hintereinander geschaltet und/oder insbesondere während des Betriebes der Vorrichtung hintereinander schaltbar, so dass nur positiv zwischenklassifizierte Testobjekte von einem ersten Gesamtklassifikator zu einem zweiten Gesamtklassifikator weitergebbar sind und/oder weitergegeben werden. Somit sind die Gesamtklassifikatoren vorzugsweise in Hinblick auf die Übergabe oder Weitergabe der Testobjekte in Reihe geschaltet und/oder schaltbar. Vorzugsweise werden Testobjekte mit negativer Zwischenklassifikation verworfen. Bevorzugt liegt ein positiv zwischenklassifiziertes Testobjekt vor, wenn der Betrag des Zwischenklassifikationswerts einen Grenzwert, insbesondere einen vorgegebenen und/oder festen Grenzwert, überschreitet.

Die Positionsangabe des ersten und des zweiten Gesamtklassifikators sind vorzugsweise als relative Positionsangaben zueinander zu verstehen, so dass der erste Gesamtklassifikator an einer beliebigen Position innerhalb der Reihe der Gesamtklassifikatoren stehen kann und der zweite Gesamtklassifikator einen oder den nachfolgenden Gesamtklassifikator in der Reihe bildet.

Optional ist vorgesehen, dass die Bewertungsvorrichtung programmtechnisch und/oder schaltungstechnisch ausgebildet ist, so dass von dem ersten Gesamtklassifikator an den zweiten Gesamtklassifikator ein positiv zwischenklassifiziertes Testobjekt zusammen mit einer insbesondere nicht-redundanten Kenngröße auf Basis der Zwischenklassifikation übergeben wird. Nicht-redundant bedeutet vorzugsweise, dass die Kenngröße nicht bereits aus der Tatsache ableitbar ist, dass ein Testobjekt weitergereicht wird. Die Kenngröße ist dabei bevorzugt als ein Zwischenklassifikationswert und/oder als Objektwahrscheinlichkeit ausgebildet, also als Wahrscheinlichkeit, dass ein Suchobjekt in dem Testobjekt enthalten ist. Vorzugsweise ist die Kenngröße aus dem Zwischenklassifikationswert des ersten Gesamtklassifikators gebildet, alternativ ist die Kenngröße zusätzlich aus den Zwischenklassifikationswerten von allen in der Reihe vorhergehenden Gesamtklassifikatoren oder einer beliebigen Teilmenge davon gebildet. Insbesondere ist die Kenngröße als Vektor und/oder als kumulierter Wert auf Basis der Zwischenklassifikationswerte der vorhergehenden Gesamtklassifikatoren oder Teilmengen davon ausgebildet.

Bei einer bevorzugten Realisierung der Bewertungsvorrichtung ist diese als Teil einer Objektdetektions- und/oder Objektverfolgungsvorrichtung implementiert, welche programmtechnisch und/oder schaltungstechnisch zur Detektion und/oder zur Verfolgung eines Suchobjekts in einem Bild und/oder in einer Bildersequenz ausgebildet ist.

In dieser Realisierung sind optional und/oder alternativ die nachfolgenden Ausbildungen vorgesehen: Die Testobjekte sind als Bilder und/oder als Bildausschnitte und/oder als Repräsentationen davon ausgebildet und/oder die Merkmale sind als Datenfelder, insbesondere zweidimensionale ("bildartige") Felder ausgebildet und/oder die Bewertungsfunktion gibt als Wahrscheinlichkeit eine Objektwahrscheinlichkeit dafür aus, dass sich ein Suchobjekt in einem Testobjekt befindet und/oder der Zwischenklassifikationswert ist die geschätzte Objektwahrscheinlichkeit eines Gesamtklassifikators. Bei einer besonders bevorzugten Realisierung sind die Merkmale an die Basisfunktionen der Hadamard-Transformation angelehnt und sind bevorzugt als Haar-Features konkretisiert, die insbesondere jeweils aus schwarzen und weißen Flächen bestehen oder diese aufweisen.

Bei einer weiteren bevorzugten Realisierung oder Weiterbildung ist der Merkmalswert als eine Verknüpfung der Ergebnisse der Anwendung des Merkmals auf zwei verschiedene Testobjekte, insbesondere auf zwei verschiedene Bilder, Bildbereiche und/oder Repräsentation davon, ausgebildet. Bei einer optionalen, alternativen Definition ist der Merkmalswert die Antwort auf die Anwendung eines Merkmals auf ein einziges Testobjekt, wobei das Testobjekt ein Paar (zwei) Testregionen umfasst. Bevorzugt wird oder werden diese Ausbildungen bei der Objektverfolgung eingesetzt, wobei die Bewertungsvorrichtung zur Anwendung eines Merkmals auf zwei verschiedene Testobjekte, wobei die Testobjekte vorzugsweise aus Bildern zu verschiedenen Zeitpunkten einer Bildersequenz stammen, und/oder auf ein Testobjekt, welches zwei Testregionen umfasst, ausgebildet ist.

Anders oder konkretisiert ausgedrückt wird bei dieser Objektverfolgungsvorrichtung in einem zum Zeitpunkt t aufgenommenen Bild Bt ein Objektfenster ermittelt, in dem sich das Suchobjekt befindet oder am wahrscheinlichsten befindet. Zu diesem Zweck wird in dem aktuellen Bild Bt ein oder mehrere verschiedene Suchfenster gebildet. Die verschiedenen Suchfenster werden beispielsweise durch Verschieben eines Suchrahmens in dem Bild Bt erzeugt, insbesondere in einem oder um einen Bereich, in dem das Suchobjekt zu einem früheren Zeitpunkt detektiert wurde. Für das oder jedes Suchfenster wird ein erster Zwischenmerkmalswert At durch die Anwendung eines Musters auf den Bildinhalt des jeweiligen Suchfensters berechnet wird. Im weiteren wird durch Anwendung des gleichen Merkmals auf den Bildinhalt eines Objektfensters in einem zum Zeitpunkt t-1, also früher, aufgenommenen Bild B(t-1) oder eines Objektfensters in einem zu einem Startzeitpunkt t0 aufgenommenen Bild B(t0) ein zweiter Zwischenmerkmalswert A(t-1) bzw. A(t0) gebildet. Das Objektfenster bezeichnet dabei einen Bildbereich, in dem das Suchobjekt zu dem Zeitpunkt t-1 bzw. t0 detektiert wurde. Der jeweils erste und der zweite Zwischenmerkmalswert des gleichen Musters werden, insbesondere durch Differenzbildung, miteinander verknüpft, wobei das Ergebnis der Verknüpfung den Merkmalswert des Einzelklassifikators für das entsprechende Suchfenster bildet und über die Bewertungsfunktion an den Gesamtklassifikator gegeben wird.

Schließlich betrifft die Erfindung noch ein Verfahren mit den Merkmalen des Anspruchs 15, welches die bestimmungsgemäße Verwendung der Bewertungsvorrichtung und/oder der Objektdetektions- und/oder -verfolgungsvorrichtung oder deren optionale Abwandlungen betrifft. Ferner wird ein Computerprogramm mit Programmecode-Mitteln mit den Merkmalen des Anspruchs 16 beansprucht.

Kurze Beschreibung der Zeichnungen

Weitere Vorteile, Merkmale und Wirkungen der Erfindung ergeben aus der nachfolgenden Beschreibung bevorzugter Ausführungsbeispiele, insbesondere in Verbindung mit den beigefügten Figuren. Dabei zeigen:

Figur 1 eine schematische Darstellung eines Ausführungsbeispiels der erfindungsgemäßen Vorrichtung in Form eines Flussdiagramms,

Figur 2 eine Abwandlung des ersten Ausführungsbeispiels in gleicher Darstellung,

Figur 3 ein erstes Ausführungsbeispiel eines erfindungsgemäßen Verfahrens, welches beispielsweise auf der Vorrichtung in Figur 1 oder 2 ausgeführt wird,

Figur 4 ein Flussdiagramm zur Illustration der Erzeugung und/oder des Trainings der Einzelklassifikatoren sowie der Gesamtklassifikatoren in Figur 1 und 2,

Figur 5 eine Illustration zur Erzeugung der Bewertungsfunktion in Figur 4,

Figur 6 ein Grafik zur Illustration der Berechnung von Rechtecksummen mit Hilfe eines Integralbildes,

Figur 7 Ausführungsbeispiele von verschiedenen Mustern,

Figur 8 ein Flussdiagramm zur Erläuterung eines Objektverfolgers mit einer oder mehreren Bewertungsvorrichtungen gemäß der Figuren 1 oder 2,

Figur 9 ein Flussdiagramm zur weiteren Erläuterung des Objektverfolgers in Figur 8,

Figur 10 ein Flussdiagramm einer konkretisierten Ausführungsform des Moduls "Objektverfolgung" in Figur 9,

Figur 11 ein erstes Ausführungsbeispiel einer Vorrichtung zur Objektdetektion und/oder - verfolgung.

Ausführungsform(en) der Erfindung

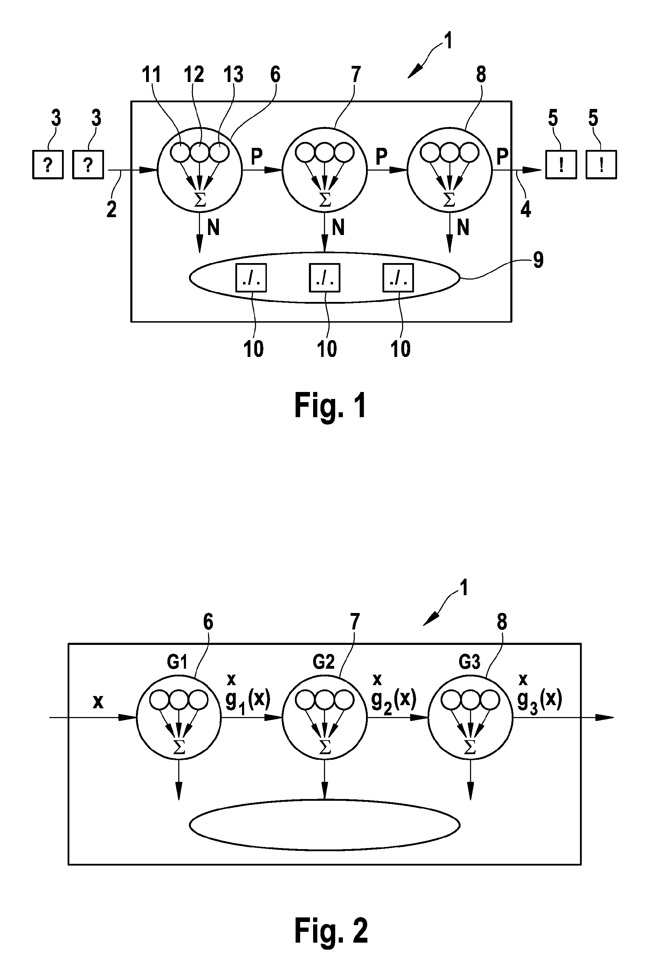

Die Figur 1 zeigt eine schematische Darstellung einer Bewertungsvorrichtung 1 als ein erstes Ausführungsbeispiel der Erfindung. Die Bewertungsvorrichtung 1 weist einen Eingang 2 für Testobjekte 3 sowie einen Ausgang 4 für von der Bewertungsvorrichtung 1 positiv bewertete Testobjekte 5 auf.

Zur Bewertung sind beispielhaft für eine beliebige Anzahl drei Gesamtklassifikatoren 6, 7 und 8 vorgesehen, die seriell angeordnet sind und von den Testobjekten 3 sequentiell durchlaufen werden. Die Anzahl der Gesamtklassifikatoren ist nur beispielhaft, bei der Realisierung werden mehr, insbesondere mehr als 4 Gesamtklassifikatoren implementiert. Jeder Gesamtklassifikator 6, 7 bzw. 8 ist als Weiche ausgebildet, so dass Testobjekte 3 entweder zu einem nachfolgenden Gesamtklassifikator 7, 8 bzw. zu dem Ausgang 4 weitergereicht werden oder verworfen werden, wobei die verworfenen Testobjekte 3 in einen Container 9 als negativ bewertete Testobjekte 10 aussortiert oder datentechnisch gelöscht werden.

Die Entscheidung über das Weiterreichen oder Verwerfen der Testobjekte 3 wird in jedem Gesamtklassifikator 6, 7 oder 8 anhand einer Zwischenklassifikation getroffen. Ist diese Zwischenklassifikation positiv "P", so wird das aktuelle Testobjekt weitergereicht, ist diese Zwischenklassifikation negativ "N", so wird das aktuelle Testobjekt verworfen.

Die Zwischenklassifikation wird durch Anwendung von Einzelklassifikatoren 11, 12 und 13 auf das jeweilige Testobjekt 3 zur Bildung von Einzelklassifikationswerten und die Zusammenfassung der Einzelklassifikationswerte zu einem gemeinsamen Zwischenklassifikationswert durchgeführt. Der Zwischenklassifikationswert wird dann gegenüber einer Bedingung, z.B. auf Überschreiten eines Grenzwertes geprüft und-abhängig von dem Ergebnis der Prüfung - wird das aktuelle Testobjekt 3 positiv oder negativ zwischenklassifiziert. Auch hier ist darauf hinzuweisen, dass die Anzahl der Einzelklassifikatoren 11, 12 und 13 nicht auf drei beschränkt ist, sondern größer oder kleiner sein kann und/oder dass die Verknüpfung der Einzelklassifikationswerte nur beispielhaft als Summe in der Figur 1 dargestellt ist.

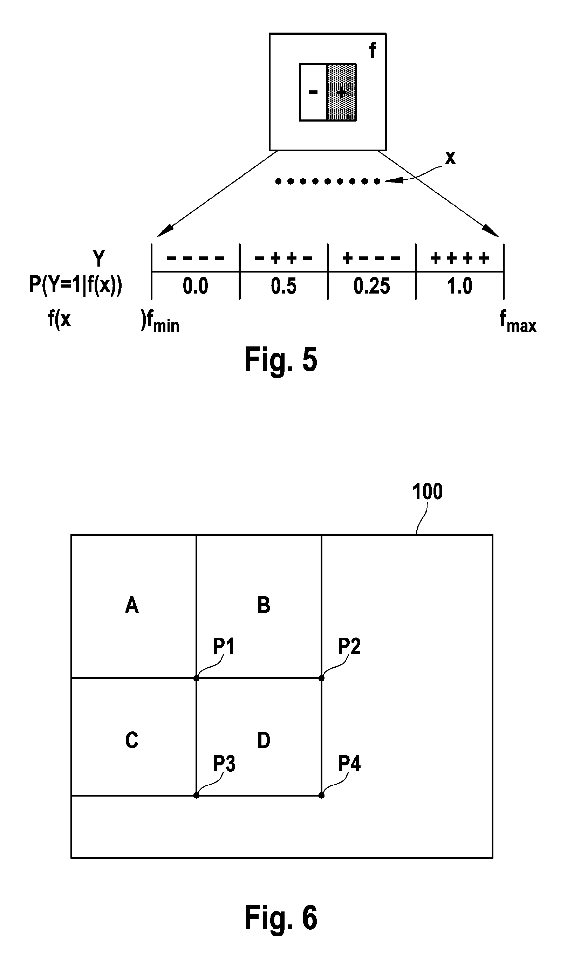

Die Einzelklassifikatoren 11, 12, und 13 sind als wahrscheinlichkeitsgestützte Klassifikatoren ausgebildet, die als Einzelklassifikationswert einen Wert aus einem Wertebereich zwischen einer oberen und einer unteren Grenze, also z.B. zwischen 0 und 1, oder aus einem Wertebereich, der mehr als 2 Einzelwerte aufweist, also z. B. aus den Werten (0,1; 0,2; 0,3; 0,4; 0,5; 0,6; 0,7; 0,8; 0,9; 1) o.ä., auswählen. Jeder Einzelklassifikator 11, 12 bzw. 13 umfasst ein Merkmal f, welches auf das jeweilige Testobjekt 3 angewendet wird und als Antwort auf die Anwendung einen Merkmalswert $u=f(x)$ zurückgibt. Dieser Merkmalswert u wird in einem weiteren Schritt in ein Intervall eingeordnet, welches dann über eine Bewertungsfunktion in den Einzelklassifikationswert abgebildet wird, wie ausführlich noch in Zusammenhang mit der Figur 5 erläutert wird.

Die Bewertungsvorrichtung 1 ist insgesamt in Form einer Kaskade, insbesondere einer Entscheidungskaskade realisiert. Diese Kaskade ist dabei so aufgebaut, dass negativ zu bewertende Testobjekte möglichst früh als solche klassifiziert werden. Dies geschieht dadurch, dass alle Testobjekte, die von einer Stufe in der Kaskade, also von einem Gesamtklassifikator, negativ zwischenklassifiziert werden, bereits endgültig verworfen werden und nur die positiv zwischenklassifizierten Testobjekte der aktuellen Stufe an die nächst Stufe weiteregereicht werden. Da in den meisten Anwendungen der Bewertungsvorrichtung 1, insbesondere bei der Objektdetektion, sehr viele negativ zu bewertende und wenige positiv zu bewertende Testobjekte vorkommen, ermöglicht diese Kaskade eine effektive und somit schnelle Bewertung. Vorzugsweise umfassen die ersten Stufen nur wenige Einzelklassifikatoren, wobei ein Großteil der Testobjekte bereits in den ersten Stufen ausgesondert wird und bei den späteren Stufen, die jeweils eine größere Anzahl von Einzelklassifikatoren als die ersten Stufen umfassen, nur eine geringere Menge an Testobjekten geprüft werden muss.

Optional wird bei der Bewertungsvorrichtung 1 jeweils zwischen den Gesamtklassifikatoren 6, 7 und 8 nicht nur das positiv zwischenklassifizierte Testobjekt 3, sondern ergänzend eine Kenngröße zur vorhergehenden Zwischenklassifikation, insbesondere ein oder mehrere Zwischenklassifikationswerte, weitergereicht. Die Gesamtklassifikatoren 6, 7 und 8 sind dabei ausgebildet, so dass der oder die weitergereichten Zwischenklassifikationswerte bei der Bildung des aktuellen Zwischenklassifikationswertes berücksichtigt wird bzw. werden. Somit vereinfacht sich die Aufgabe des aktuellen Gesamtklassifikators, denn dieser muss lediglich den bereits vorhandenen Zwischenklassifikationswert der vorhergehenden Gesamtklassifikatoren weiter verfeinern.

Die Figur 2 zeigt ein zweites Ausführungsbeispiel einer Bewertungsvorrichtung 1, die im wesentlichen analog zu der Bewertungsvorrichtung 1 in Figur 1 ausgebildet ist. Bei dem Beispiel in der Figur 2 erhält die erste Stufe der Kaskade, also der Gesamtklassifikator 8, als Eingabe ein zu klassifizierendes Testobjekt x und erzeugt einen Zwischenklassifikationswert gl. Im Fall einer positiven Zwischenklassifikation erhalten alle folgenden Stufen G2 bzw. G3, also allgemein Gn, den Zwischenklassifikationswert gn-1 der vorhergehenden Stufe G1 bzw. G2, also allgemein Gn-1, sowie das Testobjekt x und liefern als Ergebnis einen neuen Zwischenklassifikationswert der aus der Summe des Zwischenklassifikationswertes der vorigen Stufe und dem kumulierten Ergebnis der Einzelklassifikatoren der aktuellen Stufe gebildet ist, also allgemein gn(x) = gn-1(x) + Hn(x), wobei Hn(x) das kumulierte Ergebnis der Einzelklassifikatoren der Stufe n auf das Testobjekt x darstellt. Diese Ausführung unter Verwendung einer einfachen Summe istwie bereits erläutert - beispielhaft zu verstehen. Alternativ werden die Zwischenklassifikationswerte der verschiedenen Stufen anders verknüpft, insbesondere kann auch vorgesehen sein, dass ein Vektor weitergegeben wird, der alle früheren Zwischenklassifikationswerte gn(x) und/oder alle stufenweise kumulierten Einzelergebnisse der Einzelklassifikatoren Hn (x) umfasst.

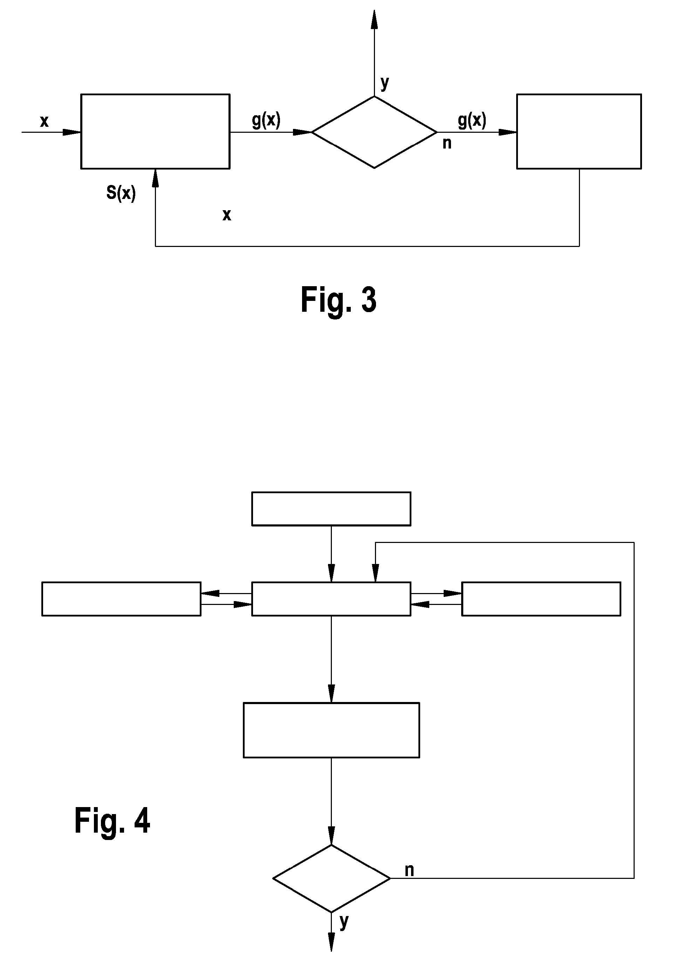

Die Figur 3 illustriert den Ablauf eines Objektdetektionsverfahrens als ein erstes Ausführungsbeispiel des erfindungsgemäßen Verfahrens. Im allgemeinen eignet sich das erfindungsgemäße Verfahren dazu, Verfahren zur Klassifikation, Objektdetektion, Regression, die aus mehreren, hintereinander geschalteten Klassifikatoren oder Detektoren bestehen, zu verbessern. Dies gilt insbesondere, wenn die Klassifikatoren als Ergebnisbaum oder Kaskade angeordnet sind, da dadurch die Anzahl der verwendeten Klassifikatoren verringert werden oder/und eine bessere Güte der Klassifikation, Detektion bzw. Regression erreicht werden. Im Folgenden wird als Anwendungsgebiet jeweils auf die Objektdetektion Bezug genommen, die Ausführungen gelten jedoch in gleicher Weise auch für die Anwendungsgebiete Klassifikation, Regression, Objektverfolgung oder ähnliche Aufgaben.

Die Aufgabe der Objektdetektion besteht darin, in einem Bild ein Suchobjekt zu detektieren. Hierzu wird das Bild in einzelne Segmente unterteilt, und die einzelnen Segmente als Testobjekte x in einen Ereignisbaum oder eine Kaskade, insbesondere eine Kaskade wie in den Figuren 1 oder 2, zur Bewertung gegeben. Somit erhält das Verfahren als Eingabe ein zu klassifizierendes Testobjekt x, also zum Beispiel ein Ausschnitt aus einem Kamerabild. Auf dieses Testobjekt x wird nun der erste ausgewählte Gesamtklassifikator G1 mit einem oder mehreren Einzelklassifikatoren angewendet. Anhand des Zwischenklassifikationswertes gl(x) des ersten Gesamtklassifikators G1 wird geprüft, ob auf das Testobjekt x weitere und/oder welche weiteren Gesamtklassifikatoren G2 ff. angewendet werden (entspricht einer positiven Zwischenklassifikation) oder ob der Zwischenklassifikationswert gl(x) als Klassifikationsergebnis ausgegeben wird (entspricht einer negativen Zwischenklassifikation). Ein Beispiel für die Prüfbedingung ist die Abfrage, ob gl(x) einen bestimmten Schwellenwert überschreitet. Neben oder statt dem Zwischenklassifikationswerte g1(x) sind auch andere Ausgaben als Klassifikationsergebnis möglich, die mit Hilfe von gl (x) gebildet sind (z.B. eine Schwellenwertbildung auf gl(x) oder ähnliches).

Für den Fall, dass weitere Gesamtklassifikatoren G2 ff. auf das Testobjekt x angewendet werden, wird der nächstfolgende Gesamtklassifikator G2 zum Beispiel anhand des Zwischenklassifikationswertes gl(x) ausgewählt oder ist durch die Struktur des Baumes oder der Kaskade fest vorbestimmt.

In einem nächsten Schritt wird dem nachfolgenden Gesamtklassifikator G2 das Testobjekt x sowie ein Vektor S(x) ={g1, ...} übergeben, der die Zwischenklassifikationswerte gn enthält und/oder ein Vektor S(x) ={H1,...}, der die Ergebnisse Hn(x) der Anwendung der Gesamtklassifikatoren Gn auf das Testobjekt x enthält und/oder Teilmengen der genannten Elemente. Der nachfolgende Gesamtklassifikator G2 ermittelt den Zwischenklassifikationswert g2(x) auf Basis des Ergebnisses H2(x) der Anwendung der Einzelklassifikatoren auf das Testobjekt x unter Berücksichtigung der Ausgaben der vorherigen Gesamtklassifikatoren S(x).

Bei der Bestimmung des aktuellen Zwischenklassifikationswertes werden somit ergänzend zu dem zu klassifizierenden Testobjekt (oder Beispiel) x auch noch die Ausgaben der vorhergehenden Gesamtklassifikatoren S(x) oder einer Teilmenge davon verwendet. Aus dem Ergebnis der Auswertung H(x) und den vorherigen Ausgaben S(x) wird die Funktion g(x) bestimmt, die in einem weiteren Schritt zur Auswahl des Nachfolgers oder zur Ausgabe des Klassifikationsergebnisses verwendet wird.

Eine vorteilhafte Variante liegt vor, wenn die Funktion gn(x) rekursiv und/oder als Summe der Ausgabe des letzten Gesamtklassifikators gn-1 und dem Ergebnis Hn(x) der Auswertung des aktuellen Gesamtklassifikators Gn berechnet wird: gn(x) = gn-1(x) + Hn(x). Dieser Variante liegt die Überlegung zu Grunde, dass insbesondere bei der Objektdetektion jeder Gesamtklassifikator versucht, die Objektwahrscheinlichkeit für das Vorliegen eines Suchobjekts innerhalb eines Testobjekts zu bestimmen (bzw. eine andere Funktion, mit deren Hilfe die Klassenzugehörigkeit eines Testobjekts bestimmt werden kann). Bei den bislang bekannten Verfahren muss hierbei jeder Gesamtklassifikator diese Wahrscheinlichkeit von neuem approximieren. Bei der beschriebenen vorteilhaften Variante steht bereits eine Schätzung dieser Objektwahrscheinlichkeit vom letzten Klassifikator in Form des Zwischenklassifikationswertes zur Verfügung. Somit muss der aktuelle Gesamtklassifikator diese Schätzung lediglich verfeinern.

Die Figur 4 zeigt ein Flussdiagramm zur Illustration der Erzeugung und/oder des Trainings der Einzelklassifikatoren 11, 12 und 13 sowie der Gesamtklassifikatoren 6, 7 und 8 bzw. G1 bis G3 in Figur 1 und 2. Als Eingabe für das Training wird eine Menge von Trainingsbeispielen x; bereitgestellt, von denen eine objektive Bewertungsinformation Y; ebenfalls als Vorab-Information eingegeben wird. Die Vorab-Information ist bevorzugt als Klassenzugehörigkeit und/ oder Klassenlabel realisiert. Die Eingabe sieht formal wie folgt aus:

$$\{(x_i, Y_i) | i = 1,...,N\}$$

mit:

X$_i$ i-tes Trainingsbeispiel
Y$_i$ i-tes Klassenlabel
i Laufindex für die Trainingsbeispiele
N Anzahl der Trainingsbeispiele

Ferner ist ein Merkmalsspeicher und/oder -generator vorgesehen, der Merkmale

$$\{(f_m)|m = 1,...,M\}$$

mit:

f$_m$ m-tes Merkmal
m Laufindex der Merkmale
M Anzahl der Merkmale

bereitstellt oder erzeugt.

Ein Merkmalsselektor erhält als Trainingsmaterial die eingegebenen Trainingsbeispiele mit den Klassenzuordnungen. In einer ersten Schleife wird von dem Merkmalsselektor zu jedem einzelnen Merkmal f$_m$ durch Training mit allen Trainingsbeispielen x; eine Bewertungsfunktion erstellt, die zusammen mit dem jeweiligen Merkmal f$_m$ dann einen trainierten Einzelklassifikator h$_m$ bildet. Hierzu fordert der Merkmalsselektor von dem Merkmalsspeicher und/oder -generator für jeden neuen Schleifendurchlauf ein neues Merkmal f$_m$ an und erhält diese auch, wie es in der Figur 4 durch den Doppelpfeil symbolisiert ist. Das angeforderte Merkmal f$_m$ wird zusammen mit den oder allen Trainingsbeispielen x; und der objektiven Bewertungsinformation Y; an den PL-Trainer (PL - probalistic learner) übergeben.

Der PL-Trainer wendet zunächst das Merkmal f$_m$ auf alle Trainingsbeispiele an und erhält somit eine Menge von

$$\{um_i = f_m(x_i)|i = 1,...,N\}$$

mit:

um; Antwort des m-ten Merkmals auf das i-te Trainingsbeispiel (Merkmalswert).

In einem nächsten Schritt wird die minimale f$_{m,min}$ und die maximale f$_{m,max}$ Antwort auf das m-te Merkmal f$_m$ bestimmt, also f$_{m,min}$=min$_i$ (f$_m$(x$_i$)) bzw. f$_{m,max}$=max$_i$ (f$_m$(x$_i$)). Anschließend wir der Wertebereich {f$_{m,min}$, f$_{m,max}$} in die Anzahl nrofBins gleich große Intervalle unterteilt.

In einem weiteren Schritt wird eine Indexfunktion b$_m$ berechnet, die jedem Merkmalswert u einen Index zuordnet, wobei die Indexfunktion vorzugsweise bei dem Training und bei der späteren Bewertung verwendet wird.

$$b_m(u) = \min(\text{nrofBins} - 1, \max(0, \text{round}\left[\frac{u - f_{m,min}}{f_{m,max} - f_{m,min}} * \text{nrofBins}\right]))$$

mit:

b$_m$ Indexfunktion für das Merkmal m
min Minimum-Operator (liefert das Minimum der in der Klammer befindlichen Werte)
max Maximum-Operator (analog Minimum-Operator)
round Rundungsoperator (rundet den in der Klammer befindlichen Wert)

Durch die Indexfunktion wird jeder Antwort (Merkmalswert) eines Trainingsbeispiels der Index o $\in$ {0, ... , nrofBins - 1} des zugehörigen Intervalls zugeordnet.

In einem weiteren Schritt werden die Ergebnisse der Zuordnungen für die Trainingsbeispiele zusammengefasst:

1. For i = 1,...,N;
// Initialisierung einer Schleife über alle Trainingsbeispiele

2. if $Y_i = 1: pb_m(f_m(x_i)) = pb_m(f_m(x_i)) + \omega_i$
// Hierbei wird geprüft, ob die Klassenzugehörigkeit des i-ten Trainingsbeispiels 1, also positiv ist. Ist dies der Fall, so wird bei einer Verteilungsfunktion p bei dem Index der Indexfunktion b zu dem i-ten Trainingsbeispiel ein Gewicht omega; addiert. Die Gewichte omega; sind alle gleich, alternativ werden die Gewichte omega; zusammen mit den Trainingsbeispielen eingegeben und/oder beim Training verändert (z.B. anhand der Güte des aktuellen Einzelklassifikators im Rahmen von Boosting-Algorithmen).

3. else if $Y_i = -1: n_{b_m}(f_m(x_i)) = n_{b_m}(f_m(x_i)) + \omega_i$
// Falls die Klassenzugehörigkeit negativ ist, so wird das dem Trainingsbeispiel zugeordnete Gewicht omega; der Verteilungsfunktion v in analoger Weise hinzugefügt.

Die Schleife wird für alle Trainingsbeispiele i durchlaufen.
In einem weiteren Schritt wird von dem PL-Trainer die Bewertungsfunktion, die einer approximierten Wahrscheinlichkeit entspricht wie folgt abgeschätzt:

$$P_m(Y = 1 | f_m(x)) \approx v_{b_m}(f_m(x)) = \frac{p_{b_m}(f_m(x))}{p_{b_m}(f_m(x)) + n_{b_m}(f_m(x))}$$

Diese Bewertungsfunktion ordnet somit einem Trainingsbeispiel oder einem Testobjekt über den Merkmalswert des Merkmals $f_m$ eine Wahrscheinlichkeit zu, dass das Trainingsbeispiel oder das Testobjekt zu der Klasse Y= 1 gehört.
Somit wird mit Hilfe eines statistischen Schätzverfahrens die Wahrscheinlichkeitsverteilung $P(Y = 1|f(x))$ an äquidistanten Stützstellen als Approximation der $P(Y = 1|x)$ bestimmt. Diese Approximation kann - wie beispielhaft gezeigt - durch einfache Bildung des Quotienten wie in obiger Gleichung geschehen, aber auch durch aufwändigere Verfahren wie z.B. k-means oder das Parzen-Window-Verfahren geschehen. Nur zur Erläuterung wird nochmals klargestellt, dass P die Wahrscheinlichkeit für das Auftreten eines pos. Testobjektes und p die Verteilungsfunktion für die pos. Testobjekte repräsentiert. Die Kombination aus Merkmal $f_m$ und Bewertungsfunktion $P_m$ bildet einen trainierten Einzelklassifikator für das Merkmal m.
In einem weiteren Schritt wird der beste Einzelklassifikator aus den m Einzelklassifikatoren von dem Merkmalsselektor ausgewählt, wobei die Auswahl beispielsweise über ein Kriterium wie das Fehlermaß erfolgt. Der ausgewählte Einzelklassifikator wird an ein Modul zur Gesamtklassifikatorerzeugung übergeben, welches einen provisorischen Gesamtklassifikator erzeugt. Dieser provisorische Gesamtklassifikator wird in einem nächsten Schritt gegen Abbruchkriterien getestet, wobei die Abbruchkriterien beispielsweise eine bestimmte Detektionsrate und/oder Falsch-Positiv-Rate und/oder das Überschreiten einer maximalen Anzahl von Einzelklassifikatoren betreffen können. Ist das Abbruchkriterium nicht erreicht wird über eine Schleife ein weiterer Einzelklassifikator ausgewählt und hinzugefügt. Bei Erreichen des Abbruchkriteriums wird der erzeugte und trainierte Gesamtklassifikator ausgegeben.
Die Figur 5 illustriert zur weiteren Verdeutlichung nochmals den Schritt der Erzeugung der Bewertungsfunktion. In dem oberen Bereich der Figur 5 ist ein Muster f gezeigt, welches aus einem schwarzen und einem weißen Bereich besteht. Den Aufbau derartiger Muster wird anhand der nachfolgenden Figuren noch ausführlich erläutert. Das Muster f wird auf eine Vielzahl von Trainingsobjekten $X_{Training}$ angewendet und von den resultierenden Merkmalswerten $f(x_{Training})$ wird der Minimumwert $f_{min}$ und der Maximumwert $f_{max}$ bestimmt. Diese beiden Werte spannen einen Wertebereich für das Merkmal f auf, der in der Figur 5 symbolisch im unteren Bereich als letzte Zeile eingetragen ist. Dieser Wertebereich wird nun in gleichgroße Intervalle unterteilt, wobei die Anzahl der Intervalle weiter oben mit dem Parameter nrofBins bezeichnet wurde. In der Figur 5 ist nrofBins = 4. Die Trainingsobjekte werden in dem nächsten Schritt anhand der Merkmalswerte in die zugehörigen Intervalle geordnet. In einem weiteren Schritt werden die Intervalle ausgewertet. Hierzu werden in jedem Intervall die Anzahl der Trainingsobjekte mit einer negativen Bewertung oder Klassenzugehörigkeit Y "-" und mit einer positiven Bewertung oder Klassenzugehörigkeit Y "+" gezählt, gewichtet und daraus eine Wahrscheinlichkeit für eine positive Bewertung abgeleitet. In dem ersten (linken) Intervall sind beispielsweise vier Trainingsbeispiele mit einer negativen Klassenzugehörigkeit eingeordnet. Die daraus abgeleitete Wahrscheinlichkeit für eine positive Bewertung ist 0/(0+4)=0 (für alle Gewichte gleich 1). In dem zweiten Intervall sind zwei Trainingsbeispiele mit positiver und zwei mit negativer Klassenzugehörigkeit registriert. Die resultierende approximierte Wahrscheinlichkeit beträgt 2/(2+2) = 0.5, usw. Es sollte klar sein, dass die Zuordnung in Figur 5 nur der Illustration der grundsätzlichen Zusammenhänge dient und nicht auf die Anzahl der Trainingsbeispiele oder Art der Gewichtung etc. beschränkt ist.

Insgesamt beschreibt sich also einer der Einzelklassifikatoren 11, 12, 13 in der Form h(x) mit der Näherung P$(Y = 1|x) \approx P(Y = 1|f(x))$ (s.o.) wie folgt:

$$h(x) = P(Y = 1|f(x)) - P(Y = -1|f(x)) = 2P(Y = 1|f(x)) - 1 = 2 * v_{b(f(x))} - 1$$

Ein Gesamtklassifikator 6, 7 oder 8, der aus einer Vielzahl von Einzelklassifikatoren besteht, liefert den Zwischenklassifikationswert: $H(x) = \sum_{i=1}^{m} h_i(x)$ mit: m Anzahl der Einzelklassifikatoren in dem Gesamtklassifikator

Die Zwischenklassifikation wird wie folgt bestimmt:

$$H(x) = sign(\sum_{i=1}^{m} h_i(x))$$

, wobei die Funktion sign(x) die Werte +1 für positive Werte und 0 (positive Zwischenklassifikation) und -1 für negative Werte (negative Zwischenklassifikation) liefert.

Alternativ wird die Zwischenklassifikation rekursiv, insbesondere wie folgt bestimmt:

$$H(x) = g_{n-1} + H(x),$$

also als Summe der Ausgabe der letzten Stufe $g_{n-1}$ plus der Summe der Einzelklassifikatoren.

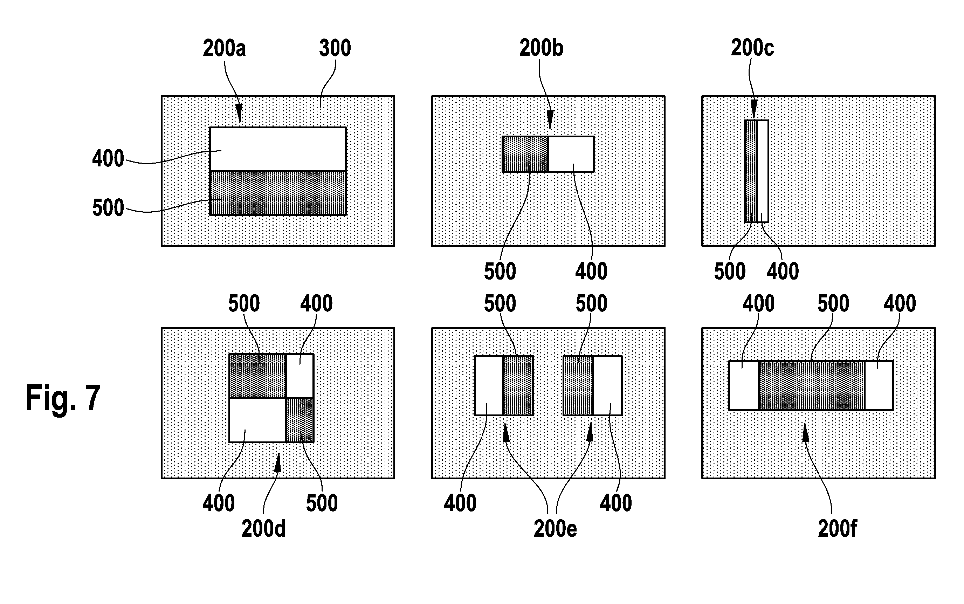

Eine mögliche Anwendung der Bewertungsvorrichtung auf ein Bild zum Zweck der Objektdetektion oder -verfolgung unter Verwendung eines Integralbildes 100 wird unter Bezugnahme auf die Figuren 6 und 7 nachfolgend erläutert. Die Figur 6 zeigt das Integralbild 100 eines zu einem Zeitpunkt t aufgenommenen Bildes B mit der Werte- oder Intensitätsverteilung g(x,y,t). Die Werteverteilung des Integralbilds 100 G(x, y, t) ergibt sich aus dem Originalbild g(x,y,t) durch Integration gemäß der Formel

$$G(x, y, t) = \sum_{x'=1,\ldots,x} \sum_{y'=1,\ldots,y} g(x'y',t)$$

Die Verwendung eines Integralbilds 100 zeigt Vorteile, wenn Integrale über bestimmte Bereiche, insbesondere über rechteckige Bereiche, des Originalbildes B berechnet werden sollen, da das Integralbild 100 eine Matrix aus Integralwerten des Bildes B darstellt. Am Punkt P1 der Figur 6 kann beispielsweise das Integral $G_{P1}$ über den Flächenbereich A des Originalbildes abgelesen werden. Am Punkt P4 kann das Integral $G_{P4}$ über die Flächen A, B, C und D entnommen werden. Das Integral über die Fläche D erhält man beispielsweise über eine einfache Berechnung: D = $G_{P4}$ - $G_{P2}$ - $G_{P3}$ + $G_{P1}$. Unabhängig von der Größe der Fläche erfordert die Bestimmung des Integrals über einen rechteckigen, achsenparallelen Bereich also nur die Summation über vier Werte des Integralbildes. Für Details wird auf den eingangs zitierten Artikel von Viola und Jones verwiesen.

Alternativ zu dieser Ausführungsform kann auch ein um einen beliebigen Winkel, insbesondere um 45˚, gedrehtes Integralbild verwendet werden, wie es beispielsweise als RSAT (rotated summed area table) in dem Fachaufsatz Lienhart, R; Kuranov, A.; Pisarevsky, V.: Empirical analysis of detection cascades of boosted classifiers for rapid object detection. In: DAGM '03, 25th Pattern Recogonition Symposium, 2003, S. 297 - 304 beschrieben ist. Die Offenbarung dieses Artikels wird via Referenzierung in die vorliegende Anmeldung integriert.

Die Figur 7 zeigt verschiedene Muster 200a, b, c, d, e, f in einem Detektionsfenster 300, die als Merkmale auf als Testobjekte x verwendete Suchfenster und/oder Objektfenster in einem Bild angewendet werden, um einen Merkmalswert f(x) zu erhalten. Innerhalb des Detektionsfensters 300, welches jeweils als grauer Bereich dargestellt ist, ist jeweils ein Muster 200a, b, c, d, e, f vorgesehen. Die Muster 200a, b, c, d, e, f weisen jeweils weiße Rechtecke 400 und schwarze Rechtecke 500 auf und unterscheiden sich untereinander durch die Anzahl, Farbe, Verteilung, Abmessungen, Lage und Größe der Rechtecke. Während das Muster 200a nur jeweils ein schwarzes und ein weißes Rechteck 400, 500 zeigt, so weist beispielsweise das Muster 200e jeweils zwei weiße und zwei schwarze Bereiche 400, 500 innerhalb des Detektionsfensters 300 auf. Bei der Anwendung der Muster 200 a, b, c, d, e, f, insbesondere samt Detektionsfenster 300 - nachfolgend auch zusammenfassend als Muster bezeichnet - auf ein Suchfenster und/oder Objektfenster werden Muster und Bild übereinandergelegt und die Werte (Intensitätswerte) des überlappenden Bereichs des Bildes wie folgt gewichtet aufsummiert: Bereiche des Bildes, die mit den grauen Bereichen des Detektionsfensters 300 überlappen, werden nicht berücksichtigt, was einer Wichtung mit dem Faktor 0 entspricht. Bereiche des Bildes, die mit weißen Bereichen 400 des Musters überlappen, werden mit negativen Vorzeichen aufsummiert, Bereiche des Bildes, die mit schwarzen Bereichen 500 des Musters überlappen, werden mit positiven Vorzeichen aufsummiert. Die gewichtete Gesamtsumme des überlappenden Bereichs stellt die Antwort f(x) auf das Muster f dar. Die Berechnung der Antwort f (x), insbesondere der gewichteten Integrale, kann dabei in recheneffizienter Weise über die Verwendung des Integralbilds 100 erfolgen.

In einer vorteilhaften Ausgestaltung umfasst der Wertebereich für das Muster mehr Werte, so dass beispielsweise ganzzahlige Werte zwischen -2 und 2 verwendet werden und fünf verschiedene Wichtungs-Bereiche innerhalb des Musters aufgespannt werden. Auch die Verwendung von skalaren oder gebrochen rationalen Werten als Wertebereich kann angewendet werden und ist beispielsweise von Vorteil, wenn ein Muster wie z.B. Muster 200f in der Summe den Wert 0 ergeben soll.

Unter Verwendung der Muster 200a, b, c, d, e, f oder anderer Muster, wie z.B. die aus der Bildverarbeitung bekannten Haar-Muster oder Abwandlungen davon, werden die wahrscheinlichkeitsorientierten Einzelklassifikatoren 11, 12, 13 gebildet, die selbst eine Gesamtklassifikator darstellen und/oder wobei mehrere derartige Einzelklassifikatoren zu einem Gesamtklassifkator zusammengefasst werden. Eine mögliche Bewertungsvorrichtung 1 in Figur 1 oder 2 umfasst üblicherweise 8 bis 40 Stufen, also hintereinander geschaltete Gesamtklassifikatoren. Bei der Objektdetektion, insbesondere unter Verwendung der Haar-Muster, werden beispielsweise 8 derartiger Gesamtklassifikatoren verwendet, die hintereinander 2, 2, 5, 6, 8, 14, 13, 10 Einzelklassifikatoren und somit Merkmale (Muster) aufweisen.

Bei einer optionalen Weiterbildung wird die Bewertungseinrichtung zur Objektverfolgung eingesetzt. Bei der Objektverfolgung liegt z.B. die Aufgabe vor, in einer Bildersequenz mit zeitlich aufeinanderfolgenden Bildern ein Objekt, welches bereits durch einen Objektdetektor detektiert ist, in den zeitlich nachfolgenden Bildern wiederzufinden und beispielsweise eine Trajektorie des Objekts zu erzeugen. Alternativ kann auf diese Weise auch ein bekanntes Objekt in einer Vielzahl von anderen Bildern gesucht werden. Zum Zweck der Erläuterung wird die Bildregion, in der das Objekt detektiert ist, als Referenzregion und die Bildregion oder - Regionen, in denen das Objekt gesucht wird, als Testregion bezeichnet. Zur Nutzung der Bewertungsvorrichtung 1 in den Figuren 1 oder 2 wird ein Merkmal auf zwei unterschiedliche Bildregionen, insbesondere die Referenzregion und die Testregion, angewandt und liefert einen Merkmalswert zurück. Anders ausgedrückt wird anstatt eines Merkmals f, welches auf ein Testobjekt x angewendet wird, also f(x), ein Verknüpfungsmerkmal f* auf einen n-Tupel von Objekten, insbesondere Zweiertupel, und/oder auf ein Paar von Testobjekt x und Referenzobjekt z, bzw. Testregion x und Referenzregion z, also $f^*(x,z) = g(f(x),f(z))$, angewendet.

Bild 8 zeigt ein Flussdiagramm eines ersten Ausführungsbeispiels eines derartigen Objektverfolgers. Als Eingabe erhält der Objektverfolger eine Sequenz von Bildern, die zunächst einer Vorverarbeitung zugeleitet werden. In einem weiteren Schritt erfolgt eine Merkmalsextraktion, wobei ein vorgegebener Satz Merkmale auf die Bilder der Sequenz und/oder auf Suchbereiche der Bilder der Sequenz angewendet werden. In dem Modul "Detektionsverfahren" werden die Suchbereiche mit Hilfe einer Bewertungsvorrichtung, wie z.B. die Bewertungsvorrichtung 1 in Figur 1 oder 2, als Testregionen auf das Vorliegen eines Suchobjekts (z.B. Fahrzeuge oder andere Hindernisse für Fahrerassistenzsysteme) bewertet. Ein mögliches Ergebnis der Bewertung ist somit die Detektion des Suchobjekts in einer Testregion. Bei einer derartigen positiven Bewertung wird die Testregion zu einer Referenzregion für die spätere Verfolgung. In einem weiteren Schritt wird die Referenzregion zusammen mit den Merkmalswerten der Referenzregion dem Modul "Verfolgungsverfahren" übergeben. Das Modul "Verfolgungsverfahren" durchsucht verschieden Testregionen in weiteren Bildern der Bildersequenz nach dem Suchobjekt, wobei zur Bewertung der Suche eine Bewertungsvorrichtung, wie z.B. die Bewertungsvorrichtung 1 in Figur 1 oder 2, verwendet wird. Als Suchmerkmal verwendet das Modul "Verfolgungsverfahren" allerdings das oben erläuterte Verknüpfungsmerkmal f*. In einer Konkretisierung des Objektverfolgers ist das Verknüpfungsmerkmal f* als Differenz der Merkmalswerte der Referenzregion und der Testregion ausgebildet, also $f^*(x,z) = f(x)-f(z)$. Die zugrundeliegende Idee bei dieser Konkretisierung ist, dass die Wahrscheinlichkeit, dass das Suchobjekt in der Testregion ist, sehr hoch ist, wenn die Differenz der Merkmalswerte von Referenzregion und Testregion gering oder nahe 0 ist und tendenziell immer geringer wird, je weiter sich die Differenz von dem Wert 0 entfernt. Alternativ detektiert und erzeugt das Modul "Verfolgungsverfahren" die Referenzregion eigenständig.

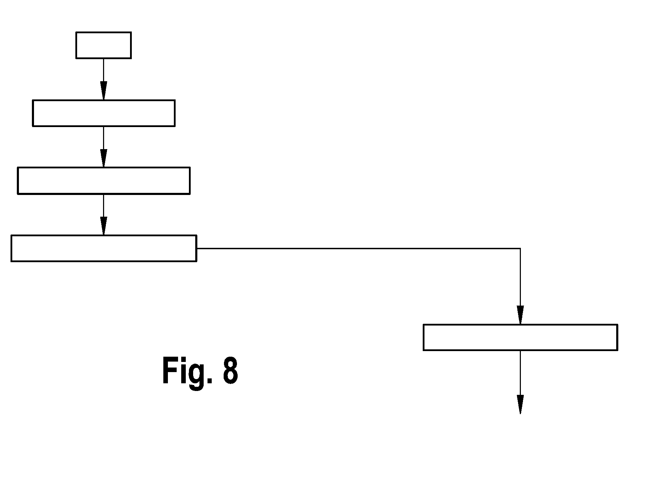

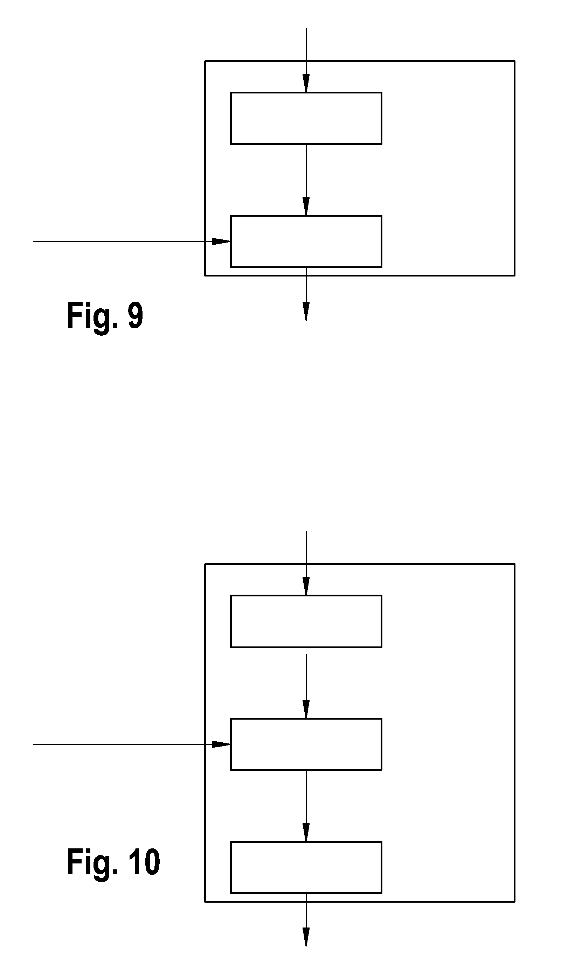

Die Figur 9 illustriert nochmals die Funktionsweise des Moduls "Verfolgungsverfahren" in Figur 8 anhand eines schematischen Flussdiagramms. Als Eingabe erhält das Modul "Verfolgungsverfahren" die Referenzregion sowie die Merkmalswerte der Referenzregion. In einem ersten Schritt werden in einer Schleife über einen Suchbereich um die Referenzregion Bildausschnitte erzeugt, die als Testregionen der Bewertungsvorrichtung 1 zugeführt werden. In der Bewertungsvorrichtung 1 werden die Testregionen unter Verwendung des oder der Verknüpfungsmerkmale f* auf das Vorliegen des Suchobjekts bewertet. Als Ergebnis wird die Testregion mit der besten Bewertung ausgegeben. Optional wird die ausgegebene Testregion in einem nächsten Bild als Referenzregion verwendet. Die Figur 10 zeigt eine optionale Konkretisierung des Moduls "Verfolgungsverfahren" in Figur 9 bzw. 8. Hierbei wird als Verknüpfungsmerkmal die Differenz zwischen den Merkmalswerten der Referenzregion und den Merkmalswerten der Testregion verwendet. Das Verfahren bzw. die Vorrichtung ist vorteilhaft ausgebildet, wenn als Verknüpfungsmerkmal die Merkmalswerte von Referenzregion und Testregion verknüpft werden, wobei die Merkmalswerte auf Basis des gleichen und/oder der gleichen Merkmale gebildet sind.

Das Training der Bewertungsvorrichtung 1 in dem Modul "Verfolgungsverfahren" läuft anlog zu dem in Zusammenhang mit den Figuren 4 und/oder 5 erläuterten Trainingsverfahren bzw. Trainingsmodul, wobei die verwendeten Trainingsbeispiele jeweils durch ein Paar (x,z) von zwei Testobjekten gebildet werden. Positive Trainingsbeispiele, also z.B. Trainingsbeispiele mit einer Klassenzugehörigkeit +1, werden dabei durch ein Beispielspaar bestehend aus einer Kombination der Referenzregion mit einer Testregion, in der sich ebenfalls das Suchobjekt befindet, gebildet. Negative Beispielpaare entstehen aus einer Kombination der Referenzregion und einer Nicht-Objektregion und / oder einer Kombination der Referenzregion mit einer Region, die nur einen Teil des Objektes enthält.

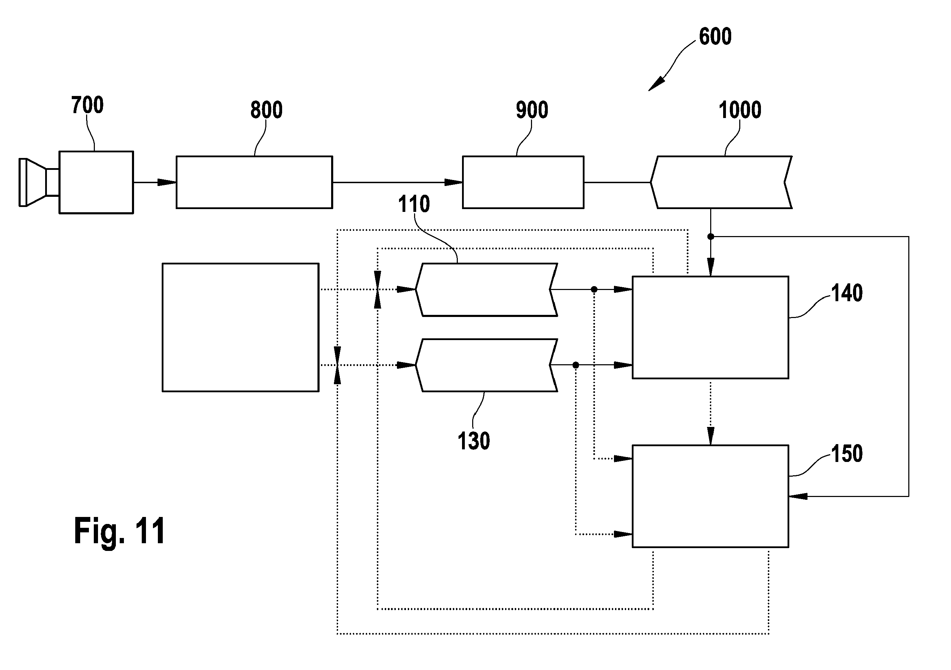

Die Figur 11 zeigt ein weiteres Ausführungsbeispiel einer Vorrichtung 600 zur Objektdetektion und/oder -verfolgung in einem schematischen Blockschaltbild. Die Vorrichtung 600 umfasst eine Kamera 700 zur Aufnahme der Bildersequenz, welche beispielsweise als CCD-, CMOS- oder Infrarot-Kamera, die insbesondere sensitiv im nahen Infrarot und/oder fernen Infrarot ist, ausgebildet ist. Der von der Kamera 700 empfangene Bilddatenstrom wird optional in einem Vorverarbeitungsmodul 800 zunächst vorverarbeitet (z.B. Fixed-Pattern Noise Unterdrückung, Bildentrauschung, geometrische Verzeichnungskorrektur, radiometrische Korrektur, lineare oder nicht-lineare Filterung, Beleuchtungskorrektur). In einem nachgeschalteten Integrationsmodul 900 werden die Bilder der Bildersequenz in Integralbilder umgerechnet und in einen Integralbildspeicher 1000 abgelegt. Die Vorverarbeitung und die Bildung des Integralbilds arbeiten im allgemeinen auf dem Bilddatenstrom (benötigen also nicht zwingenderweise die Speicherung des vollen Bildes) und sind sehr gut in Hardware darstellbar, so dass Vorverarbeitungsmodul 800 und/oder Integrationsmodul 900 vorzugsweise als FPGA (Field Programmable Gate Array) ausgebildet sind. Die Berechnung des Integralbilds benötigt nämlich nur Integer-Arithmetik und kann mit geringem Aufwand auf dem FPGA durchgeführt werden und in einem als SDRAM ausgebildeten Integralbildspeicher 1000 abgelegt werden. Ein Objekt-Detektor 140 und/oder ein Objekt-Verfolger 150, die nachfolgend noch erläutert werden, sind dagegen vorzugsweise als programmierbarer Prozessor, z.B. einem Power-PC-Prozessor (MGT 5200), ausgebildet. Der Prozessor kann auf das in dem SDRAM abgelegte Integralbild zugreifen und Antworten auf die auf das Bild angewendeten Muster in sehr effizienter Weise bestimmen. Die Erfindung kann beispielsweise auf einem Steuergerät für Fahrerassistenzsysteme heutiger Architektur (z.B. Bosch IVS Video-Steuergerät) umgesetzt werden.

Ferner ist in der Vorrichtung 600 ein Musterspeicher 110 vorgesehen, der zur Speicherung von Mustern in der Art der Muster in Figur 7 dient. Vorzugsweise werden die Muster nicht als Bilder gespeichert, sondern speicherplatzsparend über die Koordinaten der Eckpunkte der Rechtecke und die zu verwendenden Vorzeichen und Vorfaktoren, wie sie auf das Intergralbild 100 (Fig. 6) angewendet werden.

Ein Strukturspeicher 130 ist zur Speicherung der Struktur und der Belegung einer in der Vorrichtung 600, insbesondere in dem Objektdetektor 140 und/oder dem Objektverfolger 150 verwendeten Bewertungsstruktur vorgesehen. Die Struktur ist beispielsweise als Kaskade mit fester Abfolge oder als Baumstruktur mit Verzweigungen ausgebildet. Die Belegung legt fest, welche Muster aus dem Musterspeicher 110 an welche Position innerhalb der Bewertungsstruktur gesetzt werden.

Der Objektdetektor 140 ist mit dem Integralbildspeicher 1000, dem Musterspeicher 110 und dem Strukturspeicher 130 derart verschaltet, dass er auf diese zugreifen kann. Im Betrieb erhält der Objektdetektor 140 aus dem Integralbildspeicher 1000 ein zu analysierendes Bild oder einen Teilbereich davon. Dieses Bild oder der Teilbereich wird mit Hilfe einer Bewertungsvorrichtung z.B. einer Bewertungsvorrichtung gemäß Figur 1 oder 2, auf das Vorhandensein von Merkmalen oder Suchobjekten analysiert. Dabei wird das Testobjekt, also das Bild oder der Teilbereich davon, innerhalb der Bewertungsstruktur von einer Bewertungsstufe zur nächsten zusammen mit einer Kenngröße auf Basis einer vorhergehenden Zwischenklassifizierung des Testobjektes weitergereicht. Die Bewertungsvorrichtung erhält ihre Struktur (oder Architektur), insbesondere die Kaskadenstruktur aus dem Strukturspeicher 130 und die Muster für die Einzelklassifikatoren, insbesondere für die Einzelklassifikatoren 11, 12, 13 (Fig. 2), aus dem Musterspeicher 110. Wird ein Testobjekt, also ein Bild oder ein Teilbereich davon, von der Bewertungsvorrichtung als positiv bewertet, ist ein Suchobjekt gefunden und dessen Position in dem Testobjekt bekannt.

Optional wird die Position und/oder die Merkmalswerte des gefundenen Suchobjekts an einen Objektverfolger 150 weitergegeben, der in den nachfolgenden Bildern einer Bildsequenz das einmal detektierte Suchobjekt wiederfindet

EP 1 835 442 A2

und verfolgt. Als Ergebnis liefert der Objekt-Verfolger 150 die aktuelle Objektposition und/oder die Wahrscheinlichkeitsverteilung für die Objektposition in einem oder allen der nachfolgenden Bilder. Der Objektverfolger 150 kann die Objektverfolgung auf Basis einer beliebigen Technik durchführen, optional verwendet der Objektverfolger eine weitere Bewertungsvorrichtung 1 gemäß Figur 1 oder 2 zur Verfolgung des Suchobjekts und ist mit dem Musterspeicher 110 und dem Strukturspeicher 130 sowie dem Integralbildspeicher 1000 datentechnisch verbunden. Als weitere Variante ist auch möglich, dass nur ein Objektverfolger mit dem erfindungsgemäßen Verfahren verwendet wird, insbesondere ein Objektverfolger, der Eingaben von einem beliebigen (Detektions-)Modul erhält, welches nicht notwendigerweise mit dem erfindungsgemäßen Verfahren arbeitet.

Bei einer Weiterbildung des Ausführungsbeispiels werden von Objektdetektor 140 und Objektverfolger 150 eine gemeinsame Bewertungsvorrichtung und/oder die gleichen Merkmale oder Merkmalswerte und/oder die Ergebnisse der Anwendung der Merkmale auf ein Bild oder einen Teilbereich davon gemeinsam und somit rechenzeitsparend verwendet.

Die Initialisierung und/oder Belegung des Musterspeichers 110 und des Strukturspeichers 130 erfolgt im einfachsten Fall manuell, insbesondere durch Benutzeingabe. Alternativ oder ergänzend dazu erfolgt die Initialisierung und/oder Belegung durch ein Trainingsmodul 160, insbesondere ein Trainingsmodul gemäß Figur 4, welches auf Basis von Trainingsbeispielen die Muster, Struktur und Belegung auswählt. Stellvertretend für weitere Trainingsverfahren wird auf die Boosting-Verfahren, insbesondere Adaboost, RealBoost oder Gentleboost verwiesen.

Weiterhin ist optional vorgesehen, dass die Auswahl der Merkmale, der Struktur und der Belegung im Betrieb durch den Objektdetektor 140 und/oder den Objektverfolger 150 initialisiert und/oder aktualisiert wird, wie dies in der Figur 8 durch die Rückführungen angedeutet ist. Insbesondere kann der Objektdetektor 140 und/oder Objekt-Verfolger 150 die Muster liefern, anpassen und/oder aus einem vorgegebenen Satz von Mustern auswählen.

Mögliche Vorteile der Erfindung liegen also darin, dass sie eine Abwandlung von beliebigen Verfahren zur Klassifikation / Regression erlaubt, die in einer baumähnlichen Struktur aufgebaut sind, wodurch sich die Ergebnisse deutlich verbessern oder die Ergebnisse mit geringerem Aufwand (weniger Rechenzeit) erreichen lassen. Das erfindungsgemäße Verfahren kann es ferner ermöglichen, bei Vorrichtungen wie in dem eingangs zitierten Artikel die Anzahl der benötigten schwachen Klassifikatoren in einer Kaskade deutlich zu reduzieren, wobei die erreichte Detektionsrate und Falsch-Positiv-Rate unverändert bleibt. Somit kann sich entweder ein deutlicher Geschwindigkeitsvorteil ergeben, wenn weniger schwache Klassifikatoren verwendet werden, oder eine bessere Detektionsleistung des Klassifikators, wenn die Anzahl der schwachen Klassifikatoren nicht reduziert wird. Ferner haben Versuche gezeigt, dass Einzelklassifikatoren mit reelwertigen Ausgaben eine deutlich bessere Detektionsleistung als Einzelklassifikatoren mit binärer Ausgabe haben. Bei besonderen Ausführungsformen ist es vorteilhaft, wenn der Wertebereich des verwendeten Merkmals in mehrere, gleich große Intervalle aufgeteilt ist und in jedem dieser Intervalle die Wahrscheinlichkeit für ein positives Beispiel bestimmt wird. Durch die Einteilung in gleich große Intervalle wird eine sehr schnelle Klassifikation ermöglicht, da der zu dem Merkmalswert gehörige Intervallindex mit nur einer Division und einer Subtraktion ermittelt werden kann. Die vorgestellten Einzelklassifikatoren mit mehrfach gestufte und/oder reelwertige Wertebereichen sind auch im Gegensatz zu den binären Einzelklassifikatoren sehr gut zur Objektverfolgung geeignet. Ferner ist die statistische Auswertung mit geringem Rechenaufwand zu bewerkstelligen. Das erfindungsgemäße Verfahren macht sich ferner bei bestimmten Ausführungsformen die Tatsache zu nutzen, dass bei der Objektverfolgung oder - detektion die Ausgabe einer Stufe eines Baumes oder einer Kaskade die Objektwahrscheinlichkeit P(y/x) approximiert. Nach dem Stand der Technik wird aus diesem Wert durch Schwellwertbildung bestimmt, ob das Beispiel verworfen wird oder an die nächste Stufe weitergereicht wird (bei einem Baum wird vorzugsweise damit bestimmt, welcher Nachfolgerknoten ausgewertet wird). Allerdings wird dann nur das Beispiel weitergereicht, die bereits ermittelte Objektwahrscheinlichkeit wird nicht weitergegeben und muss in der nächsten Stufe (im Nachfolgerknoten) nochmals von neuem approximiert werden. Beim erfindungsgemäßen Verfahren wird dagegen die akkumulierte Ausgabe der vorherigen Stufen an die aktuelle Stufe weitergegeben. Somit vereinfacht sich die Aufgabe der aktuellen Stufe: sie muss lediglich die bereits vorhandene Schätzung der Objektwahrscheinlichkeit aus den vorhergehenden Stufen verfeinern. Ferner ist es vorteilhaft, dass die Einzelklassifikatoren bevorzugt eine Wahrscheinlichkeit approximieren, so dass die Bewertungsvorrichtung ein Gütemaß für eine Detektion liefert und somit gut in einem Fahrerassistenzsystem einsetzbar ist Insbesondere bei dem Einsatz der Bewertungsvorrichtung in einem Fahrerassistenzsystem kann es optional vorgesehen sein, Daten der Fahrzeugsensorik, die über die Eigenbewegung Auskunft geben (wie z.B. Geschwindigkeit, Gierrate, Nickrate etc.) zu verwenden, um das Wiederfinden, insbesondere die Verfolgung, eines Objekts zu erleichtern. Weiterhin können andere Umfeldsensoren, wie z.B. Radar-, Lidar-, Ultraschall- und/oder Lasersensoren, mit in dem Fahrerassistenzsystem integriert sein, um, deren Daten mit denen des Videosensors zu kombinieren und somit die Verfügbarkeit und Zuverlässigkeit zu erhöhen.

13

**Patentansprüche**

1. Bewertungsvorrichtung (1) zur Bewertung von Testobjekten mit
einem oder mehreren Gesamtklassifikatoren (6, 7, 8), wobei mindestens einer der Gesamtklassifikatoren (6, 7, 8) einen oder mehrere Einzelklassifikatoren (11, 12, 13) aufweist,
wobei mindestens einer der Einzelklassifikatoren (11, 12, 13) programmtechnisch und/oder schaltungstechnisch zur Erzeugung eines Einzelklassifikationswertes ausgebildet ist, wobei ein Merkmal auf mindestens eines der Testobjekte angewendet wird, wobei als Antwort auf die Anwendung des Merkmals ein Merkmalswert gebildet wird und wobei der Merkmalswert und/oder ein von dem Merkmalswert abgeleiteter Verarbeitungswert mit Hilfe einer Bewertungsfunktion auf den Einzelklassifikationswert abgebildet wird,
**dadurch gekennzeichnet, dass**
der Wertebereich für den Einzelklassifikationswert mehrfach gestufte und/oder reelwertige Werte umfasst.

2. Bewertungsvorrichtung (1) nach Anspruch 1, **dadurch gekennzeichnet, dass** die Wertemenge für die Merkmalswerte und/oder für die Verarbeitungswerte äquidistante Werte aufweist und/oder die Mächtigkeit der Wertemenge $2^n$ Werte aufweist.

3. Bewertungsvorrichtung (1) nach Anspruch 1 oder 2, **dadurch gekennzeichnet, dass** die Mächtigkeit der Wertemenge der Merkmalswerte größer ist als die Mächtigkeit der Wertemenge der Verarbeitungswerte.

4. Bewertungsvorrichtung (1) nach einem der vorhergehenden Ansprüche, **dadurch gekennzeichnet, dass** die Verarbeitungswerte eine Vielzahl von äquidistanten Intervallen repräsentieren, in die Merkmalswerte eingeordnet sind oder werden, und dass jedes Intervall auf einen Einzelklassifikationswert abgebildet wird.

5. Bewertungsvorrichtung (1) nach einem der vorhergehenden Ansprüche, **dadurch gekennzeichnet, dass** die Bewertungsfunktion zur Ausgabe einer Wahrscheinlichkeit oder einer Repräsentation davon für das Vorhandensein eines Suchobjekts in dem Testobjekt als Einzelklassifikationswert ausgebildet ist.

6. Bewertungsvorrichtung (1) nach einem der vorhergehenden Ansprüche, **dadurch gekennzeichnet, dass** jedem Einzelklassifikator (11, 12, 13) genau eine Bewertungsfunktion zugeordnet ist.

7. Bewertungsvorrichtung (1) nach einem der vorhergehenden Ansprüche **gekennzeichnet durch** ein Trainingsmodul, welches zur Erzeugung und/oder zum Training der Bewertungsfunktion und/oder des Gesamtklassifikators (6, 7, 8) und/oder einer Kaskade und/oder eines Baumes ausgebildet ist.

8. Bewertungsvorrichtung (1) nach Anspruch 7, **dadurch gekennzeichnet, dass** das Trainingsmodul zur Erzeugung und/oder Training der Bewertungsfunktion und/oder des Gesamtklassifikators (6, 7, 8) durch statistische Auswertung der Merkmalswerte von Trainingsobjekten ausgebildet ist.

9. Bewertungsvorrichtung (1) nach Anspruch 8, **dadurch gekennzeichnet, dass** die statistische Auswertung eine Häufigkeitsverteilung der Merkmalswerte der Trainingsobjekte umfasst.

10. Bewertungsvorrichtung (1) nach Anspruch 9, **dadurch gekennzeichnet, dass** zur Bildung der Bewertungsfunktion den Merkmalswerten auf Basis eines Vergleichs von objektiven und/oder vorbekannten Bewertungsinformationen der Trainingsobjekte eine Wahrscheinlichkeit für eine Bewertung zugeordnet wird .

11. Bewertungsvorrichtung (1) nach einem der vorhergehenden Ansprüche, **dadurch gekennzeichnet, dass** die Gesamtklassifikatoren (6, 7, 8) als Knoten in einer Baum- und/oder Kaskadenstruktur angeordnet sind.

12. Bewertungsvorrichtung (1) nach Anspruch 11, **dadurch gekennzeichnet, dass** zwischen den Knoten die Testobjekte zusammen mit einem Zwischenklassifikationswert oder einem Äquivalent davon weitergereicht werden.

13. Objektdetektions- und/oder Objektverfolgungsvorrichtung, welches programmtechnisch und/oder schaltungstechnisch zur Detektion und/oder zur Verfolgung eines Suchobjekts in einem Bild und/oder einer Bildersequenz ausgebildet ist, **dadurch gekennzeichnet, dass** die Bewertungsvorrichtung nach einem der vorhergehenden Ansprüche zur Bewertung der Relevanz eines Bildausschnitts implementiert ist.

14. Objektdetektions- und/oder Objektverfolgungsvorrichtung nach Anspruch 13 und/oder Bewertungsvorrichtung nach einem der vorhergehenden Ansprüche, **dadurch gekennzeichnet, dass** das Merkmal als Haar-Feature und/oder als Verknüpfung der Ergebnisse der Anwendung des Merkmals auf zwei unterschiedliche Testobjekte und/oder als Merkmal zur Anwendung auf ein Testobjekt mit zwei Testregionen ausgebildet ist.

15. Verfahren zur Bewertung von Testobjekten, **dadurch gekennzeichnet, dass** eine Objektdetektions- und/oder Objektverfolgungsvorrichtung nach Anspruch 13 oder 14 und/oder eine Bewertungsvorrichtung nach einem der Ansprüche 1 bis 12 eingesetzt wird.

16. Computerprogramm mit Programmcode-Mitteln, um alle Schritte des Anspruchs 15 durchzuführen, wenn das Programm auf einem Computer und/oder einer Vorrichtung von jedem Beliebigen der Ansprüche 1 bis 14 ausgeführt wird.

**Fig. 1**

**Fig. 2**

**Fig. 3**

**Fig. 4**

**Fig. 5**

**Fig. 6**

Fig. 7

EP 1 835 442 A2

Fig. 8

**Fig. 9**

**Fig. 10**

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON PAUL VIOLA ; MICHAEL JONES.** Rapid object detection using a boosted cascade of simple features. *Proc. IEEE Conf. Computer Vision Pattern Recognition,* 2001

- **LIENHART, R ; KURANOV, A. ; PISAREVSKY, V.** Empirical analysis of detection cascades of boosted classifiers for rapid object detection. *DAGM '03, 25th Pattern Recogonition Symposium,* 2003, 297-304